# EUROPÄISCHE PATENTSCHRIFT

(11) **EP 0 665 142 B1**
(45) Veröffentlichungstag und Bekanntmachung des Hinweises auf die Patenterteilung: **13.11.1996**
(21) Anmeldenummer: 95100366.4
(22) Anmeldetag: 12.01.1995
(51) Int. Cl.: B60R 22/16

(54) **Sicherheitsgurt mit Reissnaht**
Safety belt with tear seam
Ceinture de sécurité à trame déchirable

(30) Priorität: 26.01.1994 DE 9401314 U
(43) Veröffentlichungstag der Anmeldung: 02.08.1995
(73) Patentinhaber: TRW Occupant Restraint Systems GmbH, 73553 Alfdorf (DE)
(72) Erfinder: Klink, Gerd, D 73565 Spraitbach (DE)
(74) Vertreter: Degwert, Hartmut, Dipl.-Phys.

(56) Entgegenhaltungen:
- EP-A- 0 128 662
- EP-A- 0 408 909
- EP-A- 0 636 521

## Beschreibung

Die Erfindung betrifft einen Sicherheitsgurt für Fahrzeuge, mit einem Gurtbandabschnitt aus zwei aufeinanderliegenden, miteinander durch wenigstens eine Reißnaht verbundenen Gurtbandlagen, wobei die Reißnaht aus einer Vielzahl von Nahtabschnitten besteht, die abwechselnd quer zur Mittellinie des Gurtbandes von einer Seite dieser Mittellinie zur gegenüberliegenden Seite, dann zumindest annähernd in Längsrichtung und wieder zurück verlaufen.

Ein derartiger sicherheitsgurt zählt zum allgemeinen Stand der Technik.

Durch eine solche Reißnaht können in einer bestimmten Phase der Rückhaltefunktion des Sicherheitsgurtes die Verzögerungswerte, denen der Insasse ausgesetzt ist, vermindert werden. In Kombination mit einem aufblasbaren Schutzkissen kann so das Verletzungsrisiko minimiert werden. Wenn die Bruchlast der Reißnaht überschritten wird, kommt es zu einer zusätzlichen Vorwärtsverlagerung des Insassen über eine begrenzte Wegstrecke. Bei dieser zusätzlichen Vorwärtsverlagerung wird durch Fortschreiten des Aufreißens der Reißnaht Energie abgebaut. Durch Dimensionierung der Reißnaht kann auch die Vorwärtsbewegung des Fahrzeuginsassen auf die Entfaltung des Schutzkissens abgestimmt werden. Von besonderem Vorteil ist die Verwendung eines Sicherheitsgurtes mit Reißnaht in kleineren Fahrzeugen, die nur über eine geringe Knautschzone verfügen.

Bei derzeit produzierten Sicherheitsgurten mit Reißnaht sind die Nahtabschnitte senkrecht zur Mittellinie des Gurtbandes gleichmäßig in Längsrichtung beabstandet angeordnet und jeweils an einem Ende mit einem benachbarten Nahtabschnitt durch ein kurzes, in Längsrichtung orientiertes Nahtstück verbunden, so daß eine durchgehende Naht gebildet wird. Bei Überschreitung der Bruchlast der Reißnaht wird diese schrittweise und Nahtabschnitt für Nahtabschnitt aufgerissen. Zwischen jeweils zwei aufeinanderfolgenden Nahtabschnitten wird der Entfernung der beiden aufeinanderliegenden Gurtbandlagen kaum Widerstand entgegengesetzt. Das Aufreißen der Reißnaht erfolgt daher ruckweise in diskreten Schritten.

Durch die Erfindung gemäß den Merkmalen des Anspruchs 1 wird ein Sicherheitsgurt mit Reißnaht zur Verfügung gestellt, bei dem das Aufreißen sehr viel gleichmäßiger in einer großen Anzahl von Schritten erfolgt, zwischen denen die Kraft im Vergleich zur herkömmlichen Ausbildung nur wenig absinkt. Auf diese Weise wird eine gleichmäßigere Vorwärtsverlagerung des Fahrzeuginsassen erreicht, wodurch das Verletzungsrisiko weiter vermindert wird.

Gemäß der Erfindung sind in der Reißnaht je zwei in einem quer zur Mittellinie des Gurtbandes verlaufenden Nahtabschnitt benachbarte Stiche in Längsrichtung gegeneinander versetzt. Das Maß der Versetzung bestimmt den Abstand zwischen den einzelnen Schritten, mit denen die Reißnaht aufgerissen wird. Dieser Schrittabstand kann nahezu beliebig klein gemacht werden. Zugleich besteht die Möglichkeit, durch eine vergrößerte Anzahl von Nahtstichen in jedem Nahtabschnitt das Kraftniveau zu beeinflussen, bis zu dem die Reißnaht standhält. Demgegenüber ist bei zur Mittellinie des Gurtbandes senkrechter Anordnung der Nahtabschnitte die Anzahl von möglichen Nahtstichen durch die Gurtbandbreite begrenzt.

Bei der bevorzugten Ausführungsform des Sicherheitsgurtes sind die quer zur Mittellinie des Gurtbandes verlaufenden Nahtabschnitte beiderseits dieser Mittellinie entgegengesetzt zu ihr geneigt. Die Nahtabschnitte sind also annähernd symmetrisch zur Mittellinie des Gurtbandes orientiert. Ferner liegt jeweils der auf der Mittellinie gelegene Scheitel eines Nahtabschnittes annähernd auf einer durch die äußersten Nahtstiche eines benachbarten Nahtabschnitts verlaufenden Geraden. Unmittelbar nach dem Aufreißen eines Nahtabschnitts beginnt daher das Aufreißen des darauffolgenden Nahtabschnitts.

Weitere Vorteile und Merkmale der Erfindung ergeben sich aus der folgenden Beschreibung und aus der Zeichnung, auf die Bezug genommen wird. In der Zeichnung zeigen:
Fig. 1 eine Perspektivansicht eines Sicherheitsgurtsystems, dessen Sicherheitsgurt eine intakte Reißnaht aufweist;
Fig. 2 eine Teilansicht des Sicherheitsgurtes nach dem Aufreißen der Reißnaht;
Fig. 3 schematisch zwei übereinanderliegende, durch die Reißnaht miteinander verbundene Gurtbandlagen in Seitenansicht;
Fig. 4 die herkömmliche Ausbildung der Reißnaht in Draufsicht auf die Gurtbandlagen;
Fig. 5 die erfindungsgemäße Ausbildung der Reißnaht in Draufsicht auf die mit dieser ausgestatteten Gurtbandlagen; und
Fig. 6 eine Ausführungsvariante.

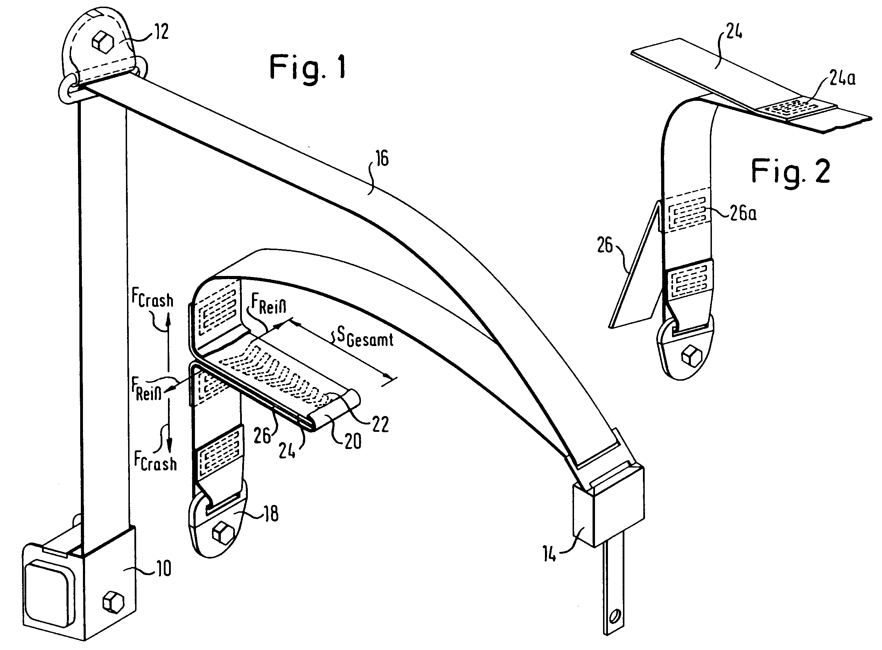

Bestandteile des in Fig. 1 gezeigten Sicherheitsgurtsystems sind in üblicher Weise ein am Fahrzeugaufbau befestigter Gurtaufroller 10, ein über diesem am B-Pfosten des Fahrzeugs befestigter Umlenkbeschlag 12, eine Steckzunge 14 und der Sicherheitsgurt selbst, der mit 16 bezeichnet ist. Das freie Ende des Sicherheitsgurtes 16 wird mittels eines Verankerungsbeschlages 18 am Fahrzeugaufbau festgelegt.

In der Nähe dieses Verankerungsbeschlages 18 ist eine Gurtbandschlaufe 20 gebildet. Innerhalb dieser Gurtbandschlaufe 20 liegen zwei lappenförmige, aufeinanderliegende und durch eine Reißnaht 22 miteinander verbundene Gurtbandlagen 24, 26. Die außerhalb der Gurtbandschlaufe 20 gelegenen Enden der lappenförmigen Gurtbandlagen 24, 26 sind durch je eine Naht 24a bzw. 26a am Gurtband des Sicherheitsgurtes 16 befestigt.

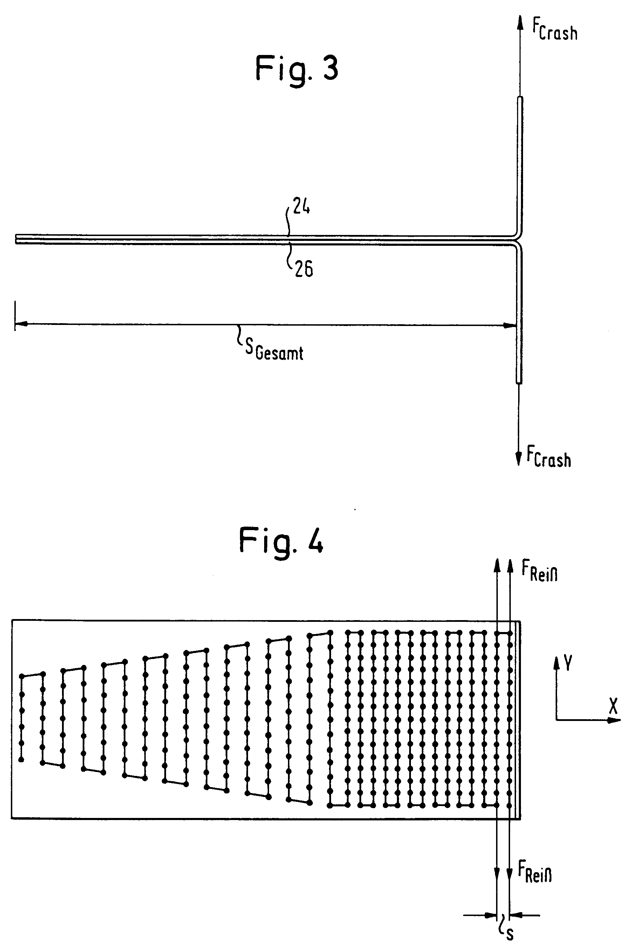

In Fig. 3 sind nur die Gurtbandlagen 24, 26 dargestellt, da die Reißnaht 22 sich nur an ihnen befindet. Die in Längsrichtung des Gurtbandes gemessene Länge, über welche die Gurtbandabschnitte 24, 26 durch die Reißnaht 22 miteinander verbunden sind, ist mit S_{gesamt} bezeichnet. Über diese Wegstrecke S_{gesamt} wird die Reißnaht 22 maximal aufgerissen, wobei die effektive Länge des Sicherheitsgurtes 16 um den doppelten Wert zunimmt. Das Aufreißen der Reißnaht 22 erfolgt unter der Wirkung der im Sicherheitsgurt beiderseits der Gurtbandschlaufe 20 auftretenden, zueinander entgegengesetzten Zugkräfte, die in Fig. 3 mit F_{Crash} bezeichnet sind.

Fig. 4 zeigt die herkömmliche Ausbildung der Reißnaht. Sie besteht aus parallelen, zur Mittellinie des Gurtbandes senkrechten Nahtabschnitten, die jeweils an einem Ende mit einem benachbarten Nahtabschnitt verbunden sind. Unter der Wirkung der beiderseits der Gurtbandschlaufe 20 auftretenden Kräfte F_{Crash} wird die Reißnaht entlang parallelen Reißkraftwirklinien beansprucht, die in Fig. 4 mit F_{Reiß} bezeichnet sind. Die Abstände zwischen diesen Reißkraftwirklinien in Längsrichtung des Gurtbandes stimmen offensichtlich mit dem Abstand zwischen den Nahtabschnitten überein. Dieser Abstand ist in Fig. 4 mit s bezeichnet. Bei Überschreitung der Bruchlast der Reißnaht werden die einzelnen Nahtabschnitte nacheinander aufgerissen. Nach dem Aufreißen eines jeden Nahtabschnitts können die Gurtbandlagen 24, 26 ohne große Krafteinwirkung auseinandergezogen werden, bis nach der Wegstrecke s der nächste Nahtabschnitt erreicht wird. Man sieht, daß die Reißnaht in einzelnen diskreten Schritten aufgerissen wird, zwischen denen die Reißkraft auf Werte nahezu Null absinkt.

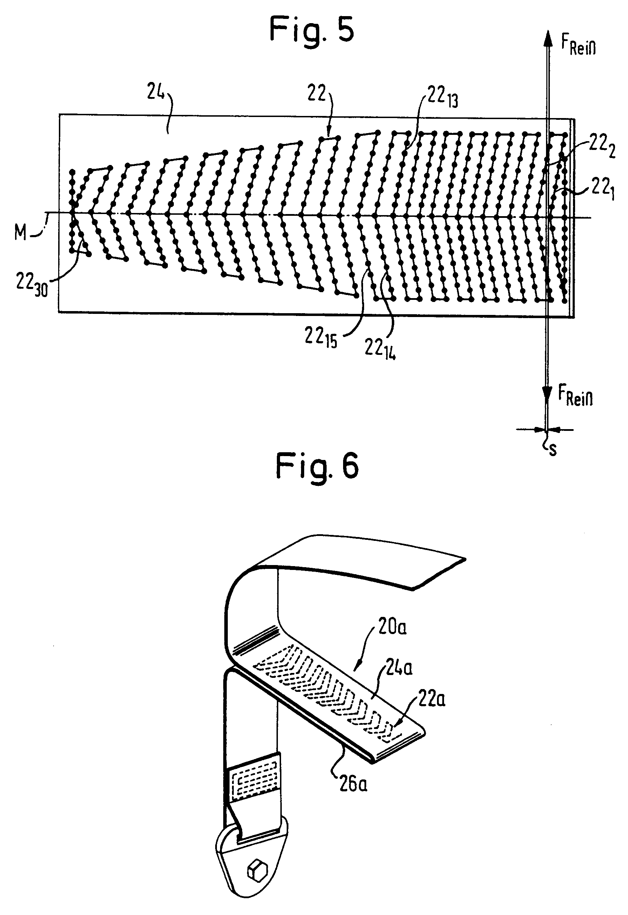

Bei der in Fig. 5 gezeigten, erfindungsgemäßen Ausbildung der Reißnaht 22 erkennt man zunächst eine erste Gruppe von Nahtabschnitten 22₁, 22₂, ... 22₁₃, zwischen denen die Abstände in Längsrichtung kleiner sind als in einer zweiten Gruppe von Nahtabschnitten 22₁₄, 22₁₅, ... 22₃₀. Die Nahtabschnitte verlaufen abwechselnd quer zur Mittellinie M des Gurtbandes von einer Seite dieser Mittellinie zur gegenüberliegenden Seite, dann über ein kurzes Stück in Längsrichtung und wieder zurück, wobei eine durchgehende Naht gebildet wird. Im Unterschied zur herkömmlichen Reißnaht verlaufen aber die Nahtabschnitte nicht senkrecht zur Mittellinie M, sondern unter einem spitzen Winkel zu dieser geneigt. Ferner sind die Nahtabschnitte spiegelsymmetrisch zur Mittellinie M orientiert. Diese Anordnung führt dazu, daß je zwei in einem quer zur Mittellinie M verlaufenden Nahtabschnitt benachbarte Stiche der Reißnaht in Längsrichtung gegeneinander um ein Maß s versetzt sind, das sehr viel kleiner ist als der Abstand zwischen benachbarten Nahtabschnitten bei der herkömmlichen Reißnaht (Fig. 4). Es werden daher Reißkraftwirklinien F_{Reiß} gebildet, die in Längsrichtung des Gurtbandes nur sehr wenig voneinander beabstandet sind. Tatsächlich kann das Maß s nahezu beliebig klein gemacht werden, so daß zwischen zwei in Längsrichtung aufeinanderfolgenden Reißkraftwirklinien die zum Auseinanderziehen der Gurtbandlagen 24, 26 erforderliche Kraft nur wenig absinkt. Man sieht ferner in Fig. 5, daß jeweils der Scheitel eines Nahtabschnitts auf derselben Reißkraftwirklinie liegt, die durch die äußeren Nahtstiche eines benachbarten Nahtabschnittes verläuft. Diese Besonderheit trägt zur Vergleichmäßigung der Aufreißkraft bei.

Die Reißkraft, bei welcher die Reißnaht 22 nachgibt, wird unter anderem durch die Dichte der Nahtstiche beeinflußt. Bei der in Fig. 5 gezeigten Ausbildung der Reißnaht 22 ist die Stichdichte in der ersten Gruppe von Nahtabschnitten 22₁ bis 22₁₃ größer als in der zweiten Gruppe von Nahtabschnitten 22₁₄ bis 22₃₀. Überdies nimmt in dieser zweiten Gruppe von Nahtabschnitten die Anzahl von Nahtstichen allmählich ab, so daß die Nahtabschnitte zum Nahtabschnitt 22₃₀ hin kürzer werden. Durch diese Verteilung der Stichdichte kann das Aufreißverhalten gesteuert und insbesondere optimal auf die Funktion des im Rückhaltesystem gleichzeitig verwendeten aufblasbaren Schutzkissens abgestimmt werden.

Für das Gurtband des Sicherheitsgurtes 16 und der Gurtbandlagen 22, 24 wird ebenso wie für den Nähfaden der Reißnaht 22 das Material PES verwendet. Der Nähfaden hat eine Dehnung zwischen 15 und 26 %, wodurch verhindert wird, daß die Naht plötzlich nachgibt und es zu einem ruckartigen Beginn des Aufreißvorganges kommt. Die Bruchlast des Nähfadens richtet sich nach der geforderten Reißkraft.

Bei der in Fig. 6 gezeigten Ausführungsvariante ist die Reißnaht 22a unmittelbar in einer Schlaufe 20a des Gurtbandes angeordnet. Die Schlaufe 20a ist durch die beiden übereinanderliegenden Gurtbandlagen 24a, 26a gebildet.

## Patentansprüche

1. Sicherheitsgurt für Fahrzeuge, mit einem Gurtbandabschnitt aus zwei aufeinanderliegenden, miteinander durch wenigstens eine Reißnaht (22) verbundenen Gurtbandlagen (24, 26), wobei die Reißnaht (22) aus einer Vielzahl von Nahtabschnitten besteht, die abwechselnd quer zur Mittellinie (M) des Gurtbandes von einer Seite dieser Mittellinie zur gegenüberliegenden Seite, dann zumindest annähernd in Längsrichtung und wieder zurück verlaufen, dadurch gekennzeichnet, daß in einem zwischen zwei Endabschnitten gelegenen Hauptbereich der Reißnaht (22) je zwei in einem quer zur Mittellinie (M) verlaufenden Nahtabschnitt (22₁...22₃₀) benachbarte Stiche der Reißnaht (22) in Längsrichtung gegeneinander versetzt sind.

2. Sicherheitsgurt nach Anspruch 1, dadurch gekennzeichnet, daß die quer zur Mittellinie (M) des Gurtbandes verlaufenden Nahtabschnitte (22₁...22₃₀) beiderseits dieser Mittellinie entgegengesetzt zu ihr geneigt sind.

3. Sicherheitsgurt nach Anspruch 2, dadurch gekennzeichnet, daß jeweils der auf der Mittellinie (M) liegende Scheitel eines Nahtabschnitts (22₁...22₃₀) annähernd auf einer durch die äußersten Nahtstiche eines benachbarten Nahtabschnitts verlaufenden Geraden (F_{Reiß}) liegt.

4. Sicherheitsgurt nach einem der vorstehenden Ansprüche, dadurch gekennzeichnet, daß auf dem Gurtbandabschnitt mehrere Gruppen (22₁...22₁₃; 22₁₄...22₃₀) von quer zur Mittellinie verlaufenden Nahtabschnitten angeordnet sind, die in jeder Gruppe einen anderen Längsabstand voneinander haben.

5. Sicherheitsgurt nach einem der vorstehenden Ansprüche, dadurch gekennzeichnet, daß die durch die Reißnaht (22) verbundenen Gurtbandlagen (24, 26) innerhalb einer Gurtbandschlaufe (20) angeordnet sind und mit ihren freien Enden aus der Gurtbandschlaufe (20) herausragen sowie am Gurtband des Sicherheitsgurtes (16) befestigt sind.

6. Sicherheitsgurt nach einem der Ansprüche 1 bis 4, dadurch gekennzeichnet, daß die Gurtbandlagen (24a, 26a) eine Gurtbandschlaufe (20a) bilden.

## Claims

1. A safety belt for vehicles, comprising a belt webbing section composed of two superimposed belt webbing plies (24, 26) connected by at least one rippable seam (22), the rippable seam (22) comprising a plurality of seam sections which extend alternately transversely in relation to the center line (M) of the belt webbing from one side of such center line to the opposite side and then at least approximately in the longitundinal direction and then back again, characterized in that in a main part of the rippable seam (22), located between two end portions, two adjacent stitches of the rippable seem (22) in a seam section (22₁...22₃₀) extending transversely in relation to the center line (M) of the belt webbing are offset in relation to one another in the longitudinal direction.

2. The safety belt as claimed in claim 1, characterized in that the seam sections (22₁...22₃₀) extending transversely in relation to the center line (M) of the belt webbing are inclined on either side of such line oppositely to the same.

3. The safety belt as claimed in claim 2, characterized in that the apex, positioned on the center line (M), of a seam section (22₁...22₃₀) is approximately arranged on a straight line (F ₜₑₐᵣ) extending through the outermost stitches of an adjacent seam section.

4. The safety belt as claimed in any one of the preceding claims, characterized in that several groups (22₁...22₁₃; 22₁₄...22₃₀) of seam sections extending transversely to the center line are arranged on the belt webbing section, the seam sections in each group possessing a different longitudinal distance between them.

5. The safety belt as claimed in any one of the preceding claims, characterized in that the belt webbing plies (24, 26) connected by the rippable seam (22) are arranged within a loop (20) of the belt webbing and have their free ends extending out of the loop (20) of belt webbing and attached to the belt webbing of the safety belt (16).

6. The safety belt as claimed in any one of claims 1 through 4, characterized in that the plies (24a, 26a) of belt webbing constitute a loop (20a) of the belt webbing.

## Revendications

1. Ceinture de sécurité pour véhicules, comprenant une partie de bande de ceinture se composant de deux couches superposées (24, 26) de bande de ceinture qui sont assemblées par au moins une couture de déchirure (22), la couture de déchirure (22) se composant de plusieurs segments de couture qui vont en alternance, transversalement à l'axe de symétrie longitudinal (M) de la bande de la ceinture, d'un côté de cette ligne de symétrie vers le côté opposé, puis au moins approximativement en direction de la longueur pour revenir en arrière, caractérisée en ce que deux points de la couture de déchirure (22) qui sont voisins dans un segment de couture (22₁...22₃₀) transversal à la ligne de symétrie (M) sont décalés dans la direction de la longueur l'un par rapport à l'autre.

2. Ceinture de sécurité selon la revendication 1, caractérisée en ce que les segments de couture (22₁...22₃₀) transversaux à la ligne de symétrie (M) de la bande de la ceinture sont inclinés en sens opposés sur cette ligne de symétrie de part et d'autre de cette dernière.

3. Ceinture de sécurité selon la revendication 2, caractérisée en ce que le sommet d'un segment de couture (22₁...22₃₀) situé sur la ligne de symétrie (M) se trouve sensiblement sur une droite (F_{déchirure}) passant par les points extérieurs de couture d'un segment voisin de couture.

4. Ceinture de sécurité selon l'une des revendications précédentes, caractérisée en ce que plusieurs groupes (22₁...22₁₃ ; 22₁₄...22₃₀) de segments de couture qui sont transversaux à la ligne de symétrie et qui sont à une distance différente dans la direction de la longueur dans chacun des groupes sont disposés sur la partie de bande de ceinture.

5. Ceinture de sécurité selon l'une des revendications précédentes, caractérisée en ce que les couches (24, 26) de bande de ceinture reliées par la couture de déchirure (22) sont disposées à l'intérieur d'une boucle (20) de la bande de ceinture et leurs extrémités libres sont saillantes sur la boucle (20) de la bande de ceinture et ces couches sont fixées à la bande de la ceinture de sécurité (16).

6. Ceinture de sécurité selon l'une des revendications 1 à 4, caractérisée en ce que les couches (24a, 26a) de la bande de ceinture forment une boucle (20a) de la bande de la ceinture.
